(19) Europäisches Patentamt / European Patent Office / Office européen des brevets

(11) **EP 2 097 837 B1**

(12) **FASCICULE DE BREVET EUROPEEN**

(45) Date de publication et mention
de la délivrance du brevet:
**12.09.2018 Bulletin 2018/37**

(21) Numéro de dépôt: **07858732.6**

(22) Date de dépôt: **23.11.2007**

(51) Int Cl.:
***G06F 17/30*** *(2006.01)*

(86) Numéro de dépôt international:
**PCT/FR2007/052392**

(87) Numéro de publication internationale:
**WO 2008/065297 (05.06.2008 Gazette 2008/23)**

(54) **STRUCTURATION D'UN FLUX DE DONNÉES NUMERIQUES**

STRUKTURIERUNG EINES DIGITALEN DATENSTROMS

STRUCTURING OF A DIGITAL DATA STREAM

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **01.12.2006 FR 0655273**

(43) Date de publication de la demande:
**09.09.2009 Bulletin 2009/37**

(73) Titulaire: **Orange
75015 Paris (FR)**

(72) Inventeurs:
• **BERRANI, Sid Ahmed
35700 Rennes (FR)**
• **LECHAT, Patrick
35770 Vern-Sur-Seiche (FR)**

(56) Documents cités:
**EP-A1- 1 067 800     US-A- 5 821 945**

• **POLI J -P: "Predicting program guides for video
structuring" PROCEDINGS OF 17TH IEEE
INTERNATIONAL CONFERENCE ON TOOLS
WITH ARTIFICIAL INTELLIGENCE, novembre
2005 (2005-11), pages 407-411, XP002450388
Hong Kong, China cité dans la demande**
• **NATUREL X ET AL: "Fast structuring of large
television streams using program guides"
ADAPTIVE MULTIMEDIA RETRIEVAL: USER,
CONTEXT, AND FEEDBACK. 4TH
INTERNATIONAL WORKSHOP, AMR 2006, juillet
2006 (2006-07), XP002450389 Geneva,
Switzerland cité dans la demande**
• **LIANG L ET AL: "Program segmentation for TV
videos" IEEE INTERNATIONAL SYMPOSIUM ON
CIRCUITS AND SYSTEMS (ISCAS), vol. 2, 2005,
pages 1549-1552, XP002450390 Piscataway, NJ,
USA cité dans la demande**
• **HERLEY C: "ARGOS: automatically extracting
repeating objects from multimedia streams" IEEE
TRANSACTIONS ON MULTIMEDIA, février 2006
(2006-02), XP002450391 USA cité dans la
demande**

**Description**

La présente invention concerne la structuration d'un flux de données numériques. Plus précisément, l'invention se rapporte à l'extraction de séquences répétitives à partir d'un flux de données numériques, en particulier mais non exclusivement d'un flux audiovisuel.

La technique de l'invention trouve notamment, mais pas seulement, des applications dans le domaine de la mise à disposition du public de contenus tels que des programmes radiophoniques ou télévisuels par exemple pour offrir des services de télévision à la demande, l'archivage et la consultation de données documentaires, le contrôle de la diffusion de programmes.

En raison des applications possibles, l'extraction de séquences répétitives à partir d'un flux de données numériques fait l'objet de nombreuses recherches et publications.

Les approches les plus simples et les plus directes pour l'extraction de séquences à partir d'un flux audiovisuel reposent sur l'utilisation des informations de programmation véhiculées dans le flux lui-même via des EIT (Event Information Tables) ou mises à disposition de façon indépendante par l'émetteur du flux (ex : guide de programmes).

Les approches reposant sur l'utilisation des informations de programmation présentent l'inconvénient d'être imprécises et incomplètes car les informations sur lesquelles elles se basent sont souvent elles-mêmes imprécises (par ex, les horaires sont donnés à titre indicatif) et incomplètes (beaucoup de programmes, notamment les petits programmes n'y sont pas mentionnés). Un autre inconvénient est que tout changement de programmation génère une erreur.

La technique décrite dans l'article de Jean-Philippe Poli intitulé "Predicting program guides for video structuring" (In Proc. of the 17th IEEE International Conférence on Tools with Artificial Intelligence, pages 407 - 411, Hong-Kong, China, Novembre 2005) propose une approche prédictive qui se base sur l'étude des informations de programmation corrigées de toute une année pour apprendre des règles de programmation. Ces règles sont représentées par un modèle de Markov caché qui permet ainsi de corriger le guide de programmes d'une journée hors période d'apprentissage.

Comme pour les approches précédentes, la technique de Jean-Philippe Poli présente l'inconvénient d'être imprécise et incomplète car elle repose sur la stabilité de la grille des programmes et sur la disponibilité d'informations de programmation corrigées sur une longue durée pour l'apprentissage. En outre, cette technique est très lourde à mettre en oeuvre compte tenu du volume de données à collecter pendant la période d'apprentissage pour constituer le modèle et du fait qu'il est nécessaire de constituer un modèle pour chaque flux.

L'approche de Xavier Naturel, Guillaume Gravier, Patrick Gros décrite dans l'article intitulé "Fast structuring of large television streams using program guides" (4th International Workshop on Adaptive Multimedia Retrieval (AMR), Geneva, Switzerland, Juillet 2006) combine plusieurs techniques. Initialement, un ensemble de références comportant des descripteurs caractérisant des programmes et inter-programmes (publicités, jingles, bandes annonces...) est constitué. Les descripteurs sont obtenus à partir du découpage en plans des programmes et inter-programmes qui constituent l'ensemble de références. L'indexation du flux s'effectue en plusieurs étapes. Tout d'abord, le flux est segmenté en plans et ces plans sont caractérisés par des descripteurs. Ensuite, chaque descripteur ainsi obtenu est comparé à ceux stockés dans l'ensemble de références. Lorsqu'une correspondance est établie, le segment est étiqueté. Une fois tous les plans traités, les segments qui n'ont pas pu être indexés sont classés en programmes ou inter-programmes en fonction de leur durée. Dans leur approche, Xavier Naturel et al. utilisent également une technique de détection des séparations de publicités qui permet de détecter une partie des spots publicitaires diffusés et d'en déduire ainsi des segments inter-programmes qui n'auraient pas été stockés dans l'ensemble de références. Enfin, Xavier Naturel et al. combinent aux deux techniques précédemment décrites l'utilisation du guide de programmes pour notamment ajouter des informations telles que le titre ou le résumé aux segments indexés.

La technique de Xavier Naturel et al. présente l'avantage de ne pas reposer uniquement sur l'utilisation des informations de programmation. Mais elle s'appuie principalement sur la constitution d'un ensemble de références et ses performances sont limitées par le contenu de cet ensemble de références qui est initialement créé manuellement. En particulier, ses performances se dégradent dès que de nouveaux programmes ou inter-programmes sont insérés dans le flux. Par ailleurs, l'indexation de différents flux nécessite la création d'autant d'ensembles de références qu'il y a de flux, ce qui multiplie le coût de mise en oeuvre de l'approche et en limite son utilisation.

D'autres approches d'extractions de séquences à partir d'un flux de données numériques reposent sur le caractère répétitif de ces séquences dans le flux.

La technique décrite par Liuhong Liang, Hong Lu, Xiangyang Xue, Yap-Peng Tan dans le document intitulé "Program segmentation for TV vidéos" (IEEE Int. Symposium on Circuits and Systems, vol. 2, pages 1549 - 1552, 2005) suppose que tous les programmes possèdent un jingle de début et un jingle de fin. Une période d'apprentissage hors ligne sur un flux enregistré permet de détecter ces jingles en les considérant comme des plans qui se répètent. La détection des jingles repose sur la recherche exhaustive de plans similaires. Pour cela, l'approche proposée nécessite tout d'abord la segmentation du flux en plans et l'extraction à partir de chaque plan d'une image clé (image du milieu du plan). La similarité entre deux plans prend en compte la durée de chaque plan, la mesure de mouvement intra-plan et le descripteur (histogramme de couleur) de l'image clé de chaque plan. Enfin, l'exhaustivité de la recherche de plans similaires est réalisée en comparant chaque plan avec tous les autres. Les jingles identifiés pendant la période d'apprentissage seront recherchés en phase d'exploitation pour identifier les programmes longs qu'ils entourent.

L'approche de Liuhong Liang et al. requiert que chaque programme possède un jingle de début et un jingle de fin. Elle est rendue très coûteuse par la mise en oeuvre d'une recherche exhaustive pour l'identification de plans similaires qui est à la base de la détection des jingles.

Dans le document intitulé "ARGOS: Automatically Extracting Repeating Objects From Multimedia Streams" (IEEE trans. on Multimedia. Vol. 8, n° 1. February 2006. pp. 115 - 129), Cormac Herley base son approche sur la détection de séquences répétitives non connues en étudiant les corrélations temporelles du flux sur une durée déterminée, dépendante d'une taille de mémoire. Tout d'abord, il segmente le flux en N blocs de taille L et définit ensuite une fonction permettant de comparer deux blocs $b_i$ et $b_j$ par corrélation. Pour que les séquences à cheval sur une frontière entre deux blocs puissent être détectées, le nombre de blocs est dédoublé de sorte qu'une seconde série de $N$ blocs chevauche la première série avec un décalage de $L/2$. Cela implique également que $L/2$ est la longueur maximale des séquences répétitives à découvrir dans la mémoire. Pour que la décision de détection soit fiable, la longueur de la séquence à découvrir doit être supérieure à $L/4,5.$ Cela permet d'avoir un score de corrélation suffisant pour le discerner du score obtenu entre deux séquences différentes. La longueur L est déterminée a priori lors du paramétrage initial du système.

La détection de séquences répétitives repose sur l'évaluation de la corrélation entre chaque séquence et toutes les autres mémorisées au sein de la mémoire. La taille de cette dernière est limitée à quelques jours ou semaines et la taille des séquences à détecter est également limitée à une durée allant de 20 / 30 secondes jusqu'à quelques minutes.

Pour optimiser l'approche, une bibliothèque dans laquelle sont stockées les séquences répétitives est constituée. Lors de la recherche de répétitions, les séquences de la bibliothèque sont considérées préalablement à toute recherche des corrélations avec le flux stocké dans la mémoire.

Par construction, la technique de Cormac Herley repose sur l'utilisation d'une mémoire et limite par conséquent la détection des séquences répétitives à la partie du flux contenue dans cette mémoire. Une même séquence répétée dans deux segments d'un même flux mais mémorisés séparément ne pourra pas être détectée. De même la longueur de la séquence répétitive à détecter est limitée à la valeur fournie à l'initialisation du système.

L'invention a notamment pour objectif de pallier ces inconvénients de l'art antérieur.

Plus précisément, un objectif de l'invention est que la solution proposée soit indépendante du flux considéré et ne nécessite pas de connaissance préalable de celui-ci.

Un autre objectif de l'invention est de pouvoir être applicable directement sans période d'apprentissage.

L'invention a encore pour objectif de permettre la détection de tous types de segments (nature, durée...).

Un autre objectif de l'invention est de permettre le rapprochement de segments de tailles différentes, comme par exemple le rapprochement des bandes annonces avec les programmes longs correspondants.

L'invention a aussi pour objectif de permettre la création automatique d'un catalogue, de façon itérative, sans intervention manuelle préalable. A cette fin l'invention propose un procédé selon la revendication 1.

Ainsi l'invention permet de traiter un flux dans sa totalité, quelle que soit sa nature, ses caractéristiques (longueur, volume des données...) et sans connaissance préalable de ce flux.

Un avantage de l'invention repose sur la création de descripteurs 10 sommaires et de descripteurs détaillés dont les caractéristiques sont différentes. Leur utilisation à des traitements différents au cours de l'invention permet d'obtenir un résultat plus complet (traitement de toutes les données disponibles) tout en ayant un coût limité.

Selon une caractéristique préférée, les étapes de description et d'accumulation sont effectuées de façon continue lors de la lecture du flux.

Ainsi, l'invention permet de traiter un flux à la volée sans période d'apprentissage.

Selon une caractéristique préférée, les étapes de regroupement, formation, extension et suppression sont effectuées périodiquement.

Les traitements étant effectués périodiquement, l'invention présente l'avantage de limiter le volume de données traitées sur une période et de minimiser le temps et le coût des différents traitements.

Selon une caractéristique préférée, pour une période donnée, l'étape de regroupement de descripteurs détaillés est réalisée sur la base des descripteurs détaillés accumulés pendant la période et sur la base des descripteurs détaillés restants après accomplissement des traitements pour les périodes précédentes.

Selon une caractéristique préférée, pour une période donnée, les descripteurs détaillés regroupés n'ayant pas permis la formation des séquences étendues sont réutilisés au cours d'une période suivante.

Les descripteurs détaillés regroupés n'ayant pas été utilisés au cours d'une période de traitement sont conservés pour les périodes ultérieures garantissant ainsi un traitement de toutes les données disponibles.

Selon une caractéristique préférée, le flux de données numériques est un flux audiovisuel.

Selon une caractéristique préférée, les séquences étendues sont stockées dans un catalogue de référence initialement vide.

Par conséquent, il n'est pas nécessaire de créer manuellement un catalogue préalablement au traitement du flux, celui-ci étant créé automatiquement par la mise en oeuvre de l'invention.

L'invention concerne aussi un dispositif de structuration d'un flux de données numériques caractérisé en ce qu'il comporte des moyens de mise en oeuvre du procédé précédemment exposé.

L'invention concerne encore, un programme comportant des instructions pour mettre en oeuvre le procédé exposé ci-dessus.

D'autres caractéristiques et avantages de la présente invention apparaîtront dans la description ci-après de modes de réalisation préférés décrits en référence aux figures dans lesquelles :

- la figure 1 représente un mode de réalisation d'un procédé de structuration d'un flux de données numériques
- la figure 2 représente un mode de réalisation d'un procédé de recherche de séquences répétitives mis en oeuvre dans le procédé de la figure 1.

L'exposé de l'invention détaillé ci-dessous traite d'un mode de réalisation préféré de l'invention dans le cas particulier d'un flux audiovisuel.

L'invention peut être mise en oeuvre sur un ordinateur.

Un flux de données numériques se compose d'un ensemble de segments. Dans le cas particulier d'un flux audiovisuel, les segments sont des plans. Chaque plan est formé d'une succession d'images avec une forte corrélation temporelle : deux images successives sont souvent presque identiques. Deux plans successifs sont séparés par une transition. De manière générale, l'invention s'applique également au cas où les segments ne sont pas séparés par des transitions, par exemple s'ils sont de longueur fixe.

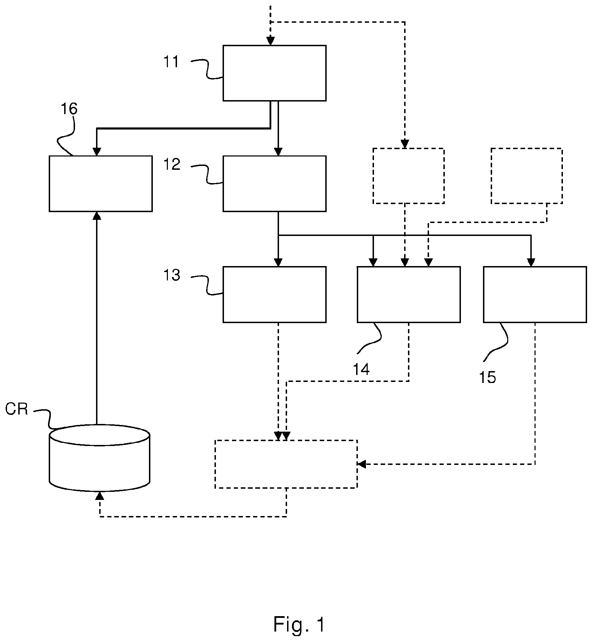

En référence à la figure 1, l'objectif de l'étape 11 de segmentation et de description d'un flux audiovisuel est de segmenter le flux et de produire une information de description des segments.

Ces opérations sont effectuées en ligne pour les flux traités à la volée, par exemple pour les flux reçus via un réseau, mais peuvent également être appliquées à des flux archivés. Dans tous les cas, on considère que le flux est lu par le dispositif selon l'invention. Ce dispositif est, par exemple, un équipement du réseau ou un terminal.

La segmentation du flux en plans est réalisée en étudiant l'évolution de la similarité colorimétrique entre deux images *Iq* et *Iv* consécutives. La mesure de similarité *S* retenue est la mesure de $\chi^2$, donnée par l'équation suivante :

$$S = \sum_{i=0}^{N-1} \frac{(q_i - v_i)^2}{q_i + v_i}$$

Où *q* et *v* sont des histogrammes tri-dimensionnels issus respectivement des images *Iq* et *Iv* et obtenus par quantification de chacune des composantes R (rouge), V (vert) et B (bleu) originales sur 16 niveaux. *N* est la dimension de ces histogrammes : $N = 16\times16\times16 = 4096$.

Cette mesure de similarité *S,* réalisée sur chaque couple d'images consécutives, est à la base de la méthode de segmentation qui comporte la détection des transitions franches et la détection des transitions progressives.

Une première méthode de détection des transitions franches (en anglais : hard-cuts) consiste à appliquer un seuil à la mesure *S* de similarité. Cette technique nécessite de choisir ce seuil : il doit être élevé pour éviter que des scènes dynamiques soient sur-segmentées, et suffisamment faible pour éviter les non-détections.

Une seconde méthode consiste à évaluer dynamiquement ce seuil en fonction de la variabilité locale des mesures de *S.* Pour cela, on introduit la fenêtre de recherche $W_t$ centrée sur l'image $I_t$ et de longueur *L*.

$$W_t = \left\{ S_{t-L/2}, ...., S_t, ..., S_{t-L/2-1} \right\}$$

Où $S_t$ est défini comme étant la mesure *S* de similarité issue des images $I_{t-1}$ et $I_t$.

La variabilité $\sigma_t$ locale de la similarité *S* sur la fenêtre $W_t$ est calculée selon l'équation :

$$\sigma_t = \sqrt{\frac{\delta_t}{L-1} - \mu_t^{\,2}}$$

où

$$\delta_t = \left( \sum_{i=-L/2}^{L/2-1} S_{t+i}^{\ 2} \right) - S_t^{\ 2}$$

et

$$\mu_t = \frac{1}{L-1} \left( \left( \sum_{i=-L/2}^{L/2-1} S_{t+i} \right) - S_t \right)$$

Cette valeur $\sigma_t$ peut donc être interprétée comme l'écart type des valeurs $S$ de similarité sur la fenêtre $W_t$, à l'exclusion de la valeur $S_t$ (position attendue du pic de transition).

L'amplitude du pic de transition est évaluée selon l'équation :

$$P_t = S_t - \frac{S_{t-1} + S_{t+1}}{2}$$

La décision finale est prise selon le principe suivant :

Si $P_t \geq \max(P_{min}, \alpha.\sigma_t)$ alors l'instant $t$ constitue une frontière de plan vidéo (transition franche), sinon la fenêtre $W_t$ est décalée itérativement pour détecter les transitions éventuelles ultérieures. $P_{min}$ constitue un seuil minimal permettant d'éviter la sur-segmentation de scènes statiques (Valeur 5000) et $\alpha$ est le coefficient multiplicateur de détection (choisi égal à *10*).

Conjointement aux transitions franches, les transitions progressives (fondus, volets...) sont évaluées sur la même fenêtre d'analyse $W_t$. Cependant, la transition ne s'opère plus instantanément mais sur plusieurs images consécutives, se traduisant par une augmentation locale des valeurs de similarité $S_t$. Il n'est pas envisageable de modéliser finement cette variation locale car elle dépend directement du type de transition observé.

On modélise l'intégralité de la fenêtre des mesures cumulées

$$\overline{W_t} = W_0 + W_1 + W_2 + \ldots\ldots + W_t$$

selon trois segments de droites :

- un segment de pente $p_b$ faible $t < t_b$ : avant la transition
- un segment de pente $p_t$ forte $t_b < t < t_e$ : pendant la transition
- un segment de pente $p_e$ faible $t > t_e$ : après la transition.

Cette modélisation nécessite une fenêtre plus large que la durée maximale de transition. La majorité des transitions observées ayant une durée de 8 à 15 images, une fenêtre de 50 images (2 secondes) est donc tout à fait adaptée.

L'algorithme mis en oeuvre pour détecter les frontières $t_b$ et $t_e$ des 3 segments de droite est le suivant:

- comme pour la détection des transitions franches, la fenêtre $\overline{W_t}$ est supposée centrée sur la transition. Quatre points peuvent donc être définis sur cette courbe $t_b^- = t_0$, $t_b^+ = t_e^- = t_{L/2}$, $t_e^+ = t_{L-1}$.
- les positions $t_b^-$ et $t_e^-$ sont incrémentées, et $t_b^+$ et $t_e^+$ sont décrémentées selon un processus itératif, de telle sorte que les pentes des segments extérieurs soient minimisées alors que celle du segment intérieur soit maximisée.
- le processus itératif est arrêté lorsque $t_b^-$ et $t_b^+$, et $t_e^-$ et $t_e^+$ sont égaux. Les pentes de chacun des segments de droite $p_b$, $p_t$ et $p_e$ sont alors comparées pour établir la décision selon l'équation ci-dessous.

Si $\begin{cases} p_t \geq \beta\, p_b \\ \quad et \\ p_t \geq \beta\, p_e \end{cases}$ et $\begin{cases} si\ Tr_{min} \leq t_e - t_b \leq Tr_{max}\ \text{une transition progressive entre } t_e \text{ et } t_b \text{ est décidée,} \\ si\ t_e - t_b \leq Tr_{min}\ \text{une transition franche en } \dfrac{t_e + t_b}{2} \text{ est décidée,} \\ \text{sinon, la transition est invalidée.} \end{cases}$

La valeur $\beta$ permet de décider la validité de la transition en fonction de la variabilité des zones de non-transition entourant celle-ci, elle joue donc le même rôle que la valeur $\alpha$ pour la décision des transitions franches. La valeur expérimentale égale à *5,* obtenue sur un corpus de test, a donné des résultats satisfaisants.

Enfin, les valeurs $Tr_{min}$ et $Tr_{max}$ déterminent les durées minimales et maximales valides d'une transition progressive. Ces valeurs sont fixées à *5* et *30* images, pour une fréquence de signal vidéo de 25 images par seconde.

Une fois la segmentation temporelle réalisée, on détermine des images clés relativement aux segments.

Selon une première variante, une unique image clé est sélectionnée par segment, par exemple au milieu du segment.

Une seconde variante améliorée est décrite ci-après.

Étant donné que la segmentation temporelle exploite l'aspect colorimétrique du signal, le choix des images clés est réalisé selon un critère différent, représentatif du mouvement du plan vidéo. On considère donc la différence absolue entre les images en niveau de gris. Le signal différence *d(t)* est donc donné par l'équation suivante :

$$d(t) = \sum_{(x,y) \in I} \left| I_{t+1}(x,y) - I_t(x,y) \right|$$

où $I_t(x,y)$ représente l'intensité du pixel de coordonnées *(x,y)* dans l'image $I_t$ correspondant à l'instant *t* dans le plan considéré.

Pour éviter de prendre en compte de petites variations trop sensibles au bruit présent dans la vidéo (notamment l'insertion de texte défilant), on convient d'utiliser le signal de la différence cumulée sur le plan. En effet, les petites variations seront encore plus négligeables en utilisant ce signal d'amplitude plus importante. On obtient alors le signal *D(t)* suivant :

$$D(t) = \sum_{u=O}^{t} d(u)$$

Toujours pour des raisons de robustesse face au bruit, un filtre gaussien de paramètre $\sigma$ est appliqué à ce signal *D(t).* On note alors $D_\sigma(t)$ le signal filtré. De plus, pour une détection homogène entre deux plans distincts, on normalise ensuite ce signal par la différence cumulée totale sur le plan. On obtient alors la formule suivante :

$$D_\sigma(t) = \frac{1}{\max_{0 \leq u \leq t}(d(u))} \sum_{u=0}^{t} d(u)$$

Ensuite, on détecte des sauts brusques du signal ainsi construit de façon à représenter au mieux le contenu visuel du plan.

Les « sauts » du signal $D_\sigma(t)$ correspondent à un changement significatif dans l'évolution du mouvement au sein du plan. Ainsi, ce n'est pas tant l'amplitude de la différence qui importe mais bien le fait qu'un changement soit identifiable. Pour cela, le test de *Page-Hinkley* est utilisé car il permet sous sa forme la plus générale de détecter à la fois les « sauts » ou les « creux » dans un signal. Dans la réalisation de l'invention, la forme utilisée est celle qui permet de détecter un saut, c'est-à-dire une augmentation subite du signal. On utilise pour cela :

$$\begin{cases} U_0 = 0 \\ U_n = \sum_{k=0}^{n} \left( D_\sigma(k) - \mu_0 - \frac{v}{2} \right) \\ m_n = \min_{0 \leq k \leq n} U_k \end{cases}$$

où $\mu_0$ est la moyenne du signal estimée en ligne et *v* l'amplitude minimale du saut que l'on souhaite détecter.

Une alarme, correspondant à un saut, est alors déclenchée lorsque $U_n - m_n > \lambda$ où $\lambda$ est un seuil prédéfini. Le fait d'avoir normalisé le signal permet de fixer des valeurs de *v* et de $\lambda$ indépendantes du plan étudié. Toutefois, pour qu'un plan long ne soit pas affecté par cette normalisation, on réduit l'amplitude minimale du saut que l'on souhaite détecter. En fait, le paramètre *v* est divisé par la longueur du plan.

Afin de représenter au mieux le contenu visuel du plan, on choisit ensuite les images clés selon le principe suivant :

- une image clé correspond à l'image présente au milieu de deux sauts détectés par le test de Page-Hinkley ;
- la première (respectivement la dernière) image clé est choisie comme étant l'image située entre la première (respectivement la dernière) image du plan et le premier (respectivement le dernier) saut du plan ;
- si aucun saut n'a été détecté, une image clé est choisie au milieu du plan.

Les images et images clés obtenues lors de la phase précédente de segmentation du flux sont ensuite décrites.

La description des images revient à extraire des vecteurs numériques (appelés descripteurs) de ces images et à leur associer une mesure de similarité, l'objectif étant de traduire la notion de similarité visuelle entre images en une simple notion de proximité entre vecteurs. Cette similarité peut être calculée en étudiant notamment les couleurs, la texture ou les contours de l'image.

Dans le mode de réalisation exposé ci-après, le flux est décrit selon deux niveaux :

- le premier niveau est une description sommaire et exhaustive où chaque image de la vidéo est décrite par un descripteur sommaire DS qui permet la mise en correspondance des images presque identiques. Il s'agit d'extraire à partir de chaque image du flux un descripteur assez simple et de lui associer une mesure de similarité qui est souvent une distance. Ces descripteurs ne sont robustes qu'aux faibles variations dues à des traitements sur le flux comme les artéfacts de la compression ou le bruit de transmission.
- le second niveau de description est celui des images clés. Les descripteurs mis en oeuvre sont des descripteurs détaillés DD, plus complexes et plus robustes aux incrustations d'objets et aux retaillages des images que les descripteurs sommaires DS.

Le descripteur sommaire DS permet de calculer une signature compacte sur chaque image du flux.

Pour définir le descripteur sommaire DS, l'image est divisée en 4 blocs sur chacun desquels est réalisé un sous-échantillonnage vers un bloc 8x8 puis un calcul de DCT (Transformée en Cosinus Discrète). De chaque DCT (Transformée en Cosinus Discrète) sont extraits 16 coefficients : 1 DC (valeur moyenne) et 15 coefficients AC (composante fréquentielle). Chacun de ces coefficients va être quantifié très grossièrement sur une longueur de 1 bit, menant à une signature globale de longueur 64 bits par concaténation des 4 blocs.

Etant donnée la nature différente du coefficient DC (moyenne du bloc) et des coefficients AC, ces deux ensembles sont quantifiés de la manière suivante :

- les 4 coefficients DC notés $DC^i$ $(i=0...3)$ associés au bloc $i$ sont quantifiés selon :

$$D^i = \begin{cases} 0 \text{ si } DC^i > \overline{DC} \\ 1 \text{ si } DC^i \leq \overline{DC} \end{cases} \qquad \text{avec} \quad \overline{DC} = \frac{1}{4}\sum_{i=0}^{3} DC^i$$

- chacun des 15 coefficients AC notés $AC_j^i$ $(j=0...15)$ de chaque bloc $i$ sont quantifiés selon :

$$A_j^i = \begin{cases} 0 \text{ si } AC_j^i > AC_{med}^i \\ 1 \text{ si } AC_j^i \leq AC_{med}^i \end{cases} \qquad \text{avec} \quad AC_{med}^i = \underset{i,j=0..15}{median}\left(AC_j^i\right)$$

La signature globale du descripteur sommaire *DS* s'écrit alors sous la forme :

$$DS = \left[ D^0 A_0^0 ... A_{15}^0 D^1 A_0^1 ... A_{15}^1 D^2 A_0^2 ... A_{15}^2 D^3 A_0^3 ... A_{15}^3 \right]$$

Le descripteur détaillé DD permet de calculer une signature fine sur les images clés du flux. Le descripteur détaillé DD est rendu tolérant aux incrustations (insertion d'un sous-titre, logo de chaîne...) par un découpage spatial de l'image réalisé pour éviter l'impact d'une incrustation locale à l'ensemble des dimensions du vecteur résultant.

Les trois étapes suivantes permettent d'élaborer le descripteur détaillé DD:

- une première étape est un découpage spatial en 3*2 blocs. Il s'agit d'un bon compromis entre la robustesse aux incrustations et celle de retaillage de la vidéo (occasionnant un décalage des limites de blocs, d'autant plus préjudiciable que ceux-ci sont de taille réduite).

- une deuxième étape comporte une transformation fréquentielle. Cette transformation fréquentielle peut être réalisée soit indépendamment sur chacun des 6 blocs extraits de l'image, soit sur un sous-échantillonnage de chacun de ces blocs. Dans un mode préféré, on effectue un sous-échantillonnage des blocs en des blocs de 64 valeurs (8x8) sur lesquels est effectuée une DCT (Transformée en Cosinus Discrète).
- une troisième étape de sélection des fréquences pendant laquelle chacune des DCT (Transformée en Cosinus Discrète) réalisées sur les 6 blocs sous-échantillonnés 8x8 génère un descripteur global potentiel de 64*6 = 384 dimensions. Ce nombre est trop élevé pour les capacités de classification ultérieures et ne se justifie pas pour les besoins de discrimination. On retient donc les 5 premiers coefficients DCT (Transformée en Cosinus Discrète) de chacune des décompositions (coefficients basse-fréquence donc les plus robustes), menant à un descripteur détaillé global de dimension 30.

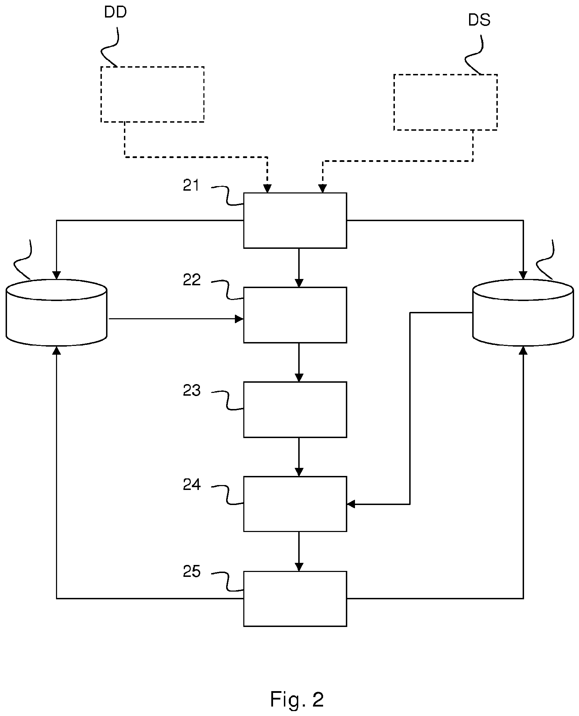

L'étape 12 d'extraction des séquences répétitives comporte des étapes 21 à 25 représentées sur la figure 2.

Une séquence répétitive est une séquence qui se répète à l'identique dans le temps. Deux séquences sont identiques si les images clés et images qui les composent respectivement peuvent être mises en correspondance, par comparaison des descripteurs détaillés puis des descripteurs sommaires.

En référence à la figure 2, les descripteurs détaillés DD et les descripteurs sommaires DS obtenus par traitement du flux selon l'étape 11 sont reçus et stockés en permanence à l'étape 21. Les descripteurs détaillés DD et les descripteurs sommaires DS sont stockés dans des bases de descripteurs.

L'étape 22 de la figure 2 de regroupement des descripteurs détaillés des images clés repose sur l'utilisation d'un algorithme de regroupement (en anglais : clustering) qui permet de retrouver les images clés qui se ressemblent.

Le regroupement est exécuté périodiquement. Ce regroupement s'effectue à partir des descripteurs détaillés stockés pendant la période écoulée et à partir des descripteurs détaillés stockés pendant les périodes précédentes qui n'ont pas pu être traités selon la procédure décrite dans la suite de la description. La période de regroupement des descripteurs détaillés des images clés peut être de 12 heures, 24 heures ou même d'une semaine, ces durées étant données à titre d'exemples et n'étant pas limitatives.

Le regroupement permet de partitionner un ensemble de vecteurs (constitutifs des descripteurs détaillés) en utilisant uniquement leur proximité dans l'espace. Les vecteurs proches dans l'espace se retrouvent dans le même groupe (en anglais : cluster). Les vecteurs isolés (en anglais : outliers) qui ne peuvent être associés à aucun groupe sont considérés comme du bruit.

Le regroupement est effectué de manière à :

- générer un très grand nombre de groupes ;
- générer des groupes de petite taille car les séquences peuvent se répéter seulement 2 ou 3 fois ;
- isoler les descripteurs détaillés correspondant à des images clés appartenant à des séquences qui ne se répètent pas, la proportion de ces descripteurs détaillés risquant d'être très élevée ;
- traiter les descripteurs détaillés à la volée et de façon incrémentale.

Il est possible d'utiliser l'algorithme dit "BAG". Il s'agit d'un algorithme dit de "micro-clustering" qui permet de générer un très grand nombre de groupes mais dont la taille peut être maitrisée. Il se base sur la notion de vecteur CF qui résume les informations essentielles d'un ensemble de vecteurs.

Pour un ensemble de vecteurs $\{X_1, ..., X_N\}$, le vecteur CF est donné par $(N, LS, r)$ où $$LS = \sum_{i=1}^{N} X_i$$ et $r$ est le rayon de l'hypersphère englobante des vecteurs $X_i$ et ayant pour centre leur centroïde.

L'algorithme BAG est itératif et considère initialement que chacun des vecteurs à traiter forme un groupe de rayon 0. A chaque itération, il réduit le nombre des groupes en procédant à des fusions successives des groupes qui sont proches et dont le rayon résultant de leur fusion ne dépasse pas un paramètre $Ft$. Celui-ci est augmenté d'une itération à l'autre afin de permettre des fusions de groupes et réduire ainsi leur nombre. A l'issue de chaque itération, les groupes très peu peuplés par rapport à la moyenne sont considérés bruités et les vecteurs qu'ils contiennent sont isolés. A l'itération suivante, ces groupes bruités sont réintroduits car le paramètre $Ft$ étant augmenté, ils peuvent fusionner avec d'autres groupes.

L'algorithme s'arrête quand le nombre de groupes descend en dessous d'un nombre fixé par l'utilisateur.

Dans un mode particulier de réalisation de l'invention :

- pour fixer la valeur initiale du paramètre $Ft$, un échantillon de descripteurs détaillés est considéré, puis, pour chacun, la distance à son plus proche voisin est calculée ; la valeur initiale du paramètre *Ft* est fixée à la moyenne de ces distances ;

- l'incrémentation du paramètre *Ft* est effectuée selon un pas régulier. Le pas choisi représente 5 % du paramètre *Ft* initial ;
- un groupe est considéré bruité s'il contient un seul descripteur détaillé ;
- le nombre de groupes est choisi entre 15 et 20% du nombre total de descripteurs détaillés à regrouper.

L'algorithme BAG peut aussi être utilisé en mode incrémental : si l'on dispose d'un ensemble de groupes déjà formés avec un rayon maximum $Ft_m$ et d'un ensemble de vecteurs bruités, et que de nouveaux vecteurs doivent être groupés avec l'ensemble initial, il est possible de continuer le regroupement en gardant les groupes déjà formés. On rajoute les nouveaux vecteurs à l'ensemble des vecteurs bruités. L'algorithme continue ainsi de façon incrémentale et absorbe les nouveaux vecteurs.

Les descripteurs détaillés des images clés ayant été regroupés au cours de l'étape 22, l'étape 23 comporte la détection des séquences répétitives associées à ces images clés.

Dans une première phase de l'étape 23, les groupes exploitables sont sélectionnés. En effet, les groupes résultant du regroupement effectué à l'étape 22 précédente ne sont pas tous exploitables. Par exemple, il arrive fréquemment qu'un groupe contienne des images successives du flux audiovisuel ne correspondant pas à différentes occurrences d'une même séquence mais plutôt à des images clés de la même séquence quasiment au même instant (lié par exemple à un changement de mouvement brusque dans la vidéo). C'est le cas notamment dans les journaux télévisés ou bien dans les dialogues des téléfilms. Il semble donc utile dans un premier temps de ne pas considérer ces données qui n'entrent pas dans le cadre propre de la recherche de séquences répétitives. Pour cela, on classe les groupes selon un critère de diversité temporelle *DT* qui correspond à l'espacement moyen entre les *r* images clés d'un même groupe. La diversité temporelle d'un groupe est ainsi donnée par l'équation suivante :

$$DT(C_i) = \frac{\sum_{k=2}^{r} f_i(k)}{r-1}$$

où $f_i(k)$ est l'espacement entre les $k^e$ et $(k\text{-}1)^e$ images du groupe $C_i$.

Si la valeur de diversité temporelle *DT* d'un groupe est trop faible, celui-ci n'est pas pris en compte dans la suite des traitements.

La seconde phase de l'étape 23 consiste à sélectionner les groupes contribuant aux séquences les plus répétitives.

Si $N^C$ est le nombre de groupes sélectionnés à l'issue de la phase précédente de sélection des groupes exploitables, une matrice *B* de taille $N^C$ x $N^C$ est construite. Cette matrice a pour fonction d'attribuer un score d'autant plus élevé à chaque couple de groupes que ses chances de permettre la détection d'une séquence répétitive sont importantes.

Pour cela, on définit la notion d'intervalle temporel. Il s'agit d'un intervalle de temps $\Delta_{seg}$ de taille fixe qui définit l'éloignement maximal entre deux images clés pour les assimiler à une unique occurrence. Ainsi si deux images clés d'un même groupe appartiennent au même intervalle temporel, l'une d'elle est supprimée et n'est plus prise en compte. Cela se produit généralement suite à des erreurs dans la phase de segmentation du flux en plans ou de calcul des images clés.

Notons $R = \llcorner r_1\ r_2\ ...\ r_{NC} \lrcorner$ le vecteur qui comptabilise le nombre d'images clés pour chaque groupe.

Pour le calcul des scores entre groupes ($b_{ij}$), plusieurs critères peuvent être pris en compte :

- l'entrelacement : deux groupes $C_i$ et $C_j$ sont entrelacés s'ils contiennent le même nombre d'images clés ($r_i = r_j$}, et les images clés de $C_i$ sont toujours postérieures (ou antérieures) aux images clés de $C_j$ dans chacune des séquences potentiellement répétitives.
- l'espacement entre les positions temporelles inter-groupes : l'étude de ces espacements renseigne sur la cohérence temporelle des séquences qui sont le résultat de l'association des images clés des deux groupes ;
- la cardinalité des groupes (donnée par la matrice *R*) : cette information renseigne sur la longueur des séquences qui sont déduites : plus le nombre d'images clés est élevé, plus la séquence répétitive qui est identifiée est longue.

L'entrelacement tel que défini ci-dessus ne spécifie pas de contrainte temporelle autre que l'ordre dans lequel les images constitutives des groupes sont apparues. Cependant, le score entre deux groupes doit mettre en évidence la proximité temporelle des images au sein de chaque occurrence de la séquence. On définit un espacement inter-groupe maximal $\Delta_{inter}$ (de l'ordre de quelques secondes, correspondant à la durée moyenne de quelques plans vidéo, par exemple 10 secondes). Si ce critère n'est pas vérifié, le score $b_{ij}$ est nul.

Pour chaque couple de groupes $C_i$ et $C_j$ qui ont pour images clés les ensembles $\{I_1, ..., I_n\}$ et $\{J_1, ..., J_n\}$, le remplissage de la matrice $B$ s'effectue selon l'algorithme suivant :

- Si $C_i$ et $C_j$ ne sont pas entrelacés, alors le score $b_{ij}$ = 0 ;
- Si au moins une des distances inter-groupes $dt_k$ est supérieure à $A_{inter}$, alors le score $b_{ij}$ = 0 ;
- Sinon, pour le calcul du score de correspondance de $C_i$ et $C_j$, la distance inter-groupes est utilisée. Plus particulièrement, il est important de mettre en évidence la régularité des occurrences de cette distance (signe qu'il s'agit bien d'une même séquence). Le score est donc d'autant plus élevé que l'écart-type associé à cette distance est faible. Différentes formules peuvent donc être utilisées pour refléter cette notion parmi lesquelles :

$b_{ij}$ = exp($-\sigma$), où $\sigma$ est l'écart-type des valeurs $dt_1$, $dt_2$, ..., $dt_n$.

$$b_{ij} = \exp\left(-\frac{\sum_{k=2}^{n}|dt_k - dt_{k-1}|)}{n-1}\right).$$

Après le calcul des scores, il faut sélectionner les couples de groupes concordants qui sont susceptibles de former une séquence qui se répète. Pour cela, un seuil $b_{max}$ est appliqué sur les scores $b_{ij}$ : les scores $b_{ij}$ inférieurs au seuil $b_{max}$ sont mis à 0 et ne sont pas retenus pour la recherche des séquences qui se répètent. Ce seuil $b_{max}$ est déterminé empiriquement en étudiant la variation des scores pour un ensemble de séquences qui se répètent.

La procédure de recherche des séquences répétitives dans la matrice de scores $B$ est un procédé itératif au cours duquel chaque itération révèle une séquence puis met à jour la matrice $B$ de telle sorte que l'itération suivante révèle la séquence répétitive d'importance immédiatement inférieure.

L'algorithme de recherche de séquences dans la matrice de scores est le suivant :

- la première étape est la sélection des groupes dont les lignes contiennent au moins une valeur supérieure à 0. Si cet ensemble est vide, la procédure est finie.
- la deuxième étape est la sélection des groupes ayant le nombre d'images clés le plus élevé.
- la troisième étape est la partition de l'ensemble des groupes ainsi sélectionnés en sous-ensembles qui vérifient chacun la propriété suivante :

  ○ chaque couple de groupes ($C_i$, $C_j$) d'un sous-ensemble

    ■ soit possède un score $b_{ij}> 0$
    ■ soit est lié par une chaine de groupes $C_k$, $C_{k+1}$, ..., $C_h$ tels que $b_{ik} >0$ et $b_{k\,k+1}>0$ et ... et $b_{hj}>0$.

- la quatrième étape est la sélection du sous-ensemble dont la cardinalité est la plus grande (celui qui génère la séquence contenant le plus d'images clés). Si deux ou plusieurs sous-ensembles sont sélectionnés, on choisit celui dont la somme des scores $b_{ij}$ entre ses membres est la plus élevée.
- la cinquième étape permet de déduire les séquences qui se répètent à partir des groupes de ce sous-ensemble et pour chacun de ces groupes, mettre la ligne et la colonne correspondantes dans la matrice $B$ à zéro ;
- la sixième étape permet de retrouver les groupes ayant des images clés qui se situent au milieu des séquences formées, et pour chacun d'eux, mettre la ligne et la colonne correspondantes dans la matrice $B$ à zéro ; Cela permet de ne pas prendre en compte ces groupes pour l'identification d'autres séquences.
- enfin, on reprend la procédure à la première étape de sélection des groupes dont les lignes contiennent au moins une valeur supérieure à 0.

La matrice de score est une matrice symétrique et le calcul du score entre groupes développé ci-dessus est aussi symétrique. Seule la partie supérieure de la matrice est calculée. Les valeurs obtenues sont ensuite reportées dans la partie inférieure par symétrie et chaque intersection ligne/colonne de la diagonale est mise à 0.

Le calcul des scores (matrice $B$) présenté précédemment repose sur l'espacement inter-groupes qui impose un espacement maximal. Cette contrainte permet de retrouver les séquences de la même durée ou presque comme les jingles, les publicités, les séquences créant l'identité de la chaîne ou les programmes rediffusés. Elles ne permettent pas de mettre en correspondance des séquences de durées différentes telles que les bandes-annonces et le programme long annoncé. Pour les bandes-annonces contenant des extraits du programme long, les images clés des groupes sont entrelacées mais les distances inter-groupes sont différentes.

Pour prendre en compte explicitement le cas des bandes annonces, il suffit de ne pas appliquer la contrainte $\Delta_{inter}$ sur la distance inter-groupes de la dernière occurrence de la séquence ($dt_n$) et de ne pas prendre en compte la distance inter-groupes de la dernière occurrence de la séquence $dt_n$ dans le calcul des scores de la matrice $B$ si la distance inter-groupes de la dernière occurrence de la séquence $dt_n$ est supérieur à l'espacement inter-groupe maximal $\Delta_{inter}$. Toutefois, la durée des programmes longs étant également bornée, un autre seuil $\delta$ (par exemple 3 heures) est donc appliqué à $dt_n$. Ainsi si $dt_n>\delta$, alors $b_{ij}=0$.

A la fin de la procédure de détection des séquences à partir de la matrice $B$, les bandes-annonces et les programmes longs sont différenciés en étudiant les valeurs des distances inter-goupes $dt_n$ des groupes qui ont permis de déduire la séquence. Si au moins une de ces distances inter-groupes est supérieure à l'espacement inter-groupe maximal $\Delta_{inter}$, alors il s'agit d'une association bande-annonce/programme long. Sinon, il s'agit d'une séquence ordinaire qui se répète.

Pour prendre en compte le cas où le programme long est diffusé plusieurs fois, il suffit de ne pas appliquer la contrainte de l'espacement inter-groupe maximal $\Delta_{inter}$ sur les dernières distances inter-groupes ($dt_{n-m} ... dt_n$) et de vérifier seulement qu'elles sont inférieures au seuil $\delta$, et de ne pas prendre en compte ces valeurs dans le calcul des scores de la matrice $B$.

Pour différentes raisons, comme par exemple un regroupement n'ayant pas permis de construire une chaine de groupes complète, il peut arriver que certaines séquences répétitives obtenues à l'issue de l'étape 23 précédente ne soient retrouvées que partiellement.

Par ailleurs, il est préférable de parfaitement délimiter dans le temps les frontières des séquences car celles-ci ont vocation à être ajoutées dans le catalogue de référence CR pour les reconnaître ultérieurement. Si la séquence extraite empiète sur des séquences précédentes et suivantes, l'identification à partir du catalogue de référence CR en sera altérée.

L'étape 24 de la figure 2 permet d'étendre les séquences répétitives retrouvées au cours de l'étape précédente. Le résultat est des séquences étendues.

Cette procédure d'extension ne concerne pas les programmes longs associés à des séquences de bandes annonces : si deux ou plusieurs occurrences d'une bande-annonce sont retrouvées, seules ces occurrences sont étendues. Le programme long associé n'est pas concerné par cette procédure.

L'extension utilise le descripteur sommaire DS défini ci-dessus dans l'étape 11 de segmentation et description du flux telle que représentée sur la figure 1. Le descripteur sommaire DS offre une signature plus compacte que le descripteur détaillé DD qui permet de calculer cette signature sur chaque image du flux.

Toutes les images du flux ayant été décrites par un descripteur sommaire, l'extension des séquences répétitives permet de délimiter (image de début et de fin) une séquence à l'image près. Il s'agit de regrouper les séquences répétitives et les images identifiées comme étant dans le prolongement de ces séquences répétitives pour obtenir des séquences étendues.

La méthode utilisée est celle de Hamming et repose sur la distance utilisée pour comparer deux signatures.

L'extension d'une séquence répétitive est réalisée par seuillage sur cette distance : pour évaluer une valeur pertinente de ce seuil, une étude de la distribution entre couples d'images choisies aléatoirement a été réalisée. Cette étude a porté sur 2000 images choisies aléatoirement, générant 1000 couples de signatures sur lesquels la distance de *Hamming* a été calculée.

Cette distribution a été modélisée par une gaussienne de moyenne $\mu$ = *24,351* et d'écart-type $\sigma$ = 5,117988. Une estimation de la probabilité que deux images $I_k$ et $I_l$ soient différentes compte tenu de leur distance de *Hamming* notée $h_{kl}$ est donc constituée par la fonction de répartition suivante :

$$P(I_k \neq I_l, h_{kl}) = \int_{-\infty}^{h_{kl}} N(h, \mu, \sigma)dh$$

La probabilité que deux images soient identiques est donc :

$$P(I_k = I_l, h_{kl}) = 1 - \int_{-\infty}^{h_{kl}} N(h, \mu, \sigma)dh$$

La valeur $h_{seuil}$ correspondant à la probabilité $P(I_k = I_l, h_{seuil})$ = 0.987 a été choisie pour la procédure d'extension.

Pour étendre les séquences $[t_{b1}, t_{e1}]$ et $[t_{b2}, t_{e2}]$ aux séquences $[t_{b1}^*, t_{e1}^*]$ et $[t_{b2}^*, t_{e2}^*]$, deux méthodes peuvent

être utilisées :

- une première méthode consistant à comparer $DS(t_{b1})$ et $DS(t_{b2})$ :

   Tant que $h(DS(t_{b1}),DS(t_{b2})) < h_{seuil}$ alors $\{t_{b1}\text{--}; t_{b2}\text{--};\}$
   Tant que $h(DS(t_{e1}),DS(t_{e2})) < h_{seuil}$ alors $\{t_{e1}\text{++}; t_{e2}\text{++};\}$
   $t_{b1}{}^* = t_{b1}; t_{e1}{}^* = t_{e1}; t_{b2}{}^* = t_{b2}; t_{e2}{}^* = t_{e2};$

- une seconde méthode procédant par fenêtrage. Celui-ci est plus robuste face aux imprécisions de positionnement initial donné par les segments $[t_{b1}, t_{e1}]$ et $[t_{b2}, t_{e2}]$. Dans cette seconde méthode, les fenêtres de descripteurs $W_1^-$, $W_1^+$, $W_2^-$ et $W_2^+$ sont définies telles que:

$$W_1^- = \left\{DS(t_{b1-L}),...,DS(t_{b1-1})\right\}$$

$$W_1^+ = \left\{DS(t_{e1+1}),...,DS(t_{e1+L})\right\}$$

$$W_2^- = \left\{DS(t_{b2-L}),...,DS(t_{b2-1})\right\}$$

$$W_2^+ = \left\{DS(t_{e2+1}),...,DS(t_{e2+L})\right\}$$

où L est la largeur de fenêtre prise en compte. Le critère d'extension est le suivant:

$$h\left(W_1^-, W_2^-\right) = \frac{1}{L}\sum_{i=1}^{L} h\left(DS(t_{b1-i}), DS(t_{b2-i})\right)$$

Tant que $h\left(W_1^-, W_2^-\right) < h_{seuil}$ alors $\{t_{b1}\mathrel{-}= L; t_{b2}\mathrel{-}= L;\}$

Tant que $h\left(W_1^+, W_2^+\right) < h_{seuil}$ alors $\{t_{e1}\mathrel{+}= L; t_{e2}\mathrel{+}= L;\}$

$t_{b1}{}^* = t_{b1}; t_{e1}{}^* = t_{e1}; t_{b2}{}^* = t_{b2}; = t_{e2}{}^* = t_{e2};$

Au cours de l'étape 25, les descripteurs détaillés DD et les descripteurs sommaires DS qui ont été traités pendant les étapes 22 à 24 et ont permis la formation de séquences étendues sont supprimés des bases des descripteurs.

La méthode appliquée à l'étape 12 représentée sur la figure 1 permet d'obtenir les informations suivantes:

- le nombre d'occurrences de la séquence répétée,
- les positions précises de chacune des occurrences,
- les descripteurs sommaires DS associés à toutes les images de chacune des occurrences, ainsi que les descripteurs détaillés DD associés aux images clés extraites de la séquence.

L'étape 13 représentée sur la figure 1 a pour but de conserver parmi ces informations une description d'une occurrence pour permettre les recherches ultérieures.

Pour une séquence, les informations suivantes sont conservées :

- la durée de la séquence, notée *L,*
- les descripteurs sommaires DS pour chacune des images,
- les positions relatives au début de la séquence des images clés sélectionnées,
- les descripteurs détaillés DD associés à chacune des images clés.

Ces informations constituent une signature, représentative de la séquence. L'ensemble des signatures constitue le catalogue de référence CR.

Lorsque toutes les occurrences des séquences répétitives ont été identifiées, le flux peut être découpé en plages de programmes longs et en plages d'inter-programmes, c'est-à-dire des séquences courtes (publicités, jingles...). Des heuristiques sont également utilisées pour compléter ce découpage. Par exemple, une séquence très courte se situant entre deux inter-programmes est étiquetée comme inter-programme. De plus, les associations bandes-annonces/programmes longs sont mises en évidence.

L'étape 14 de la figure 1, permet de recouper les résultats de la segmentation obtenus à l'issue de l'étape 13 précédente ainsi que les associations bandes-annonces/programmes longs avec les informations de programmation véhiculées avec le flux et/ou avec les informations issues du guide des programmes.

Toutes les informations déduites de cette étape sont ajoutées au catalogue de référence CR.

Au cours de l'étape 15 facultative, les découpages qui n'ont pas pu être traités, par exemple du fait de l'absence d'informations de programmation, peuvent être traités manuellement par un opérateur.

Comme indiqué plus haut, un des objectifs de l'invention est de permettre la création automatique d'un catalogue de référence CR, de façon itérative, sans intervention manuelle préalable.

Les séquences répétitives identifiées dans le flux sont sauvegardées dans le catalogue de références CR, initialement vide.

Pour une séquence donnée, les informations contenues dans le catalogue sont :

- la durée de la séquence, notée $L$,
- les descripteurs sommaires DS pour chacune des images,
- les positions relatives au début de la séquence des images clés sélectionnées,
- les descripteurs détaillés DD associés à chacune des images clés.

Selon l'étape 16 représentée sur la figure 1, le catalogue de références, s'il n'est pas vide, est interrogé, préalablement à tout traitement du flux segmenté et décrit, pour tenter de reconnaître les séquences en les comparant à des séquences préalablement identifiées.

Cette interrogation repose sur 2 phases :

- une première phase de pré-filtrage basée sur les descripteurs $DS$, permet de supprimer très rapidement de l'ensemble des candidats possibles, toutes les séquences ayant peu de similarité,
- une seconde phase de validation met en oeuvre le descripteur détaillé DD calculé sur les images clés.

Pour effectuer l'étape de pré-filtrage, il n'est pas nécessaire de prendre en compte l'ensemble des descripteurs sommaires DS extraits du flux étant donnée la forte corrélation entre les images successives du flux.

Dans le mode de réalisation préféré, on sélectionne donc les descripteurs sommaires $DS_{kE}$, où $E$ est un facteur de sous-échantillonnage régulier du flux.

Etant donné l'ensemble des $N$ signatures $S_i$ du catalogue, une fenêtre d'analyse de longueur $Lw = L_{max}/E$ est

$$L_{\max} = \max_{i=0..N-1}(L_i) .$$

constituée, $L_{max}$ étant défini selon

Toutes les $E$ images, un nouveau descripteur sommaire $DS_{kE}$ est ajouté en queue de cette fenêtre glissante $W$:

$$W_k^{DS} = \left\{ DS_{(k-L_W-1)E}, ..., DS_{kE} \right\}$$

Cette fenêtre est comparée aux $L^i$ descripteurs $DS^i$ de la signature $S_i$ du catalogue :

$$h(W_k^{DS}, S_i) = \frac{E}{L_i - 1} \sum_{j=0}^{(L_i-1)/E} h(DS_{(k-j)E}, DS_{L_i-1-jE}^i)$$

La distance résultante $h(W_k^{DS}, S_i)$ est alors comparée au seuil $h_{seuil}$. Si cette distance est inférieure au seuil, la seconde étape de validation est effectuée.

L'étape de validation s'appuie sur les $K_i$ images clés de la signature $S_i$. A chaque mise à jour d'une fenêtre d'analyse $W_k^{DV}$, construite selon le même procédé que la fenêtre $W_k^{DS}$, les descripteurs détaillés $DD^i$ les plus proches des positions $Pos(S_i, j)$, $(j=0,..,K_i-1)$ des images clés de $S_i$ sont sélectionnés, et une nouvelle distance $f(W_k^{DV}, S_i)$

est évaluée :

$$f(W_k^{DV}, S_i) = \frac{1}{K_i} \sum_{j=0}^{K_i-1} f(DV_{kE-L_{i-1}+Pos(S_i,j)}, DV_{Pos(S_i,j)}^i)$$

où $f(DD, DD)$ est une distance L2.

Cette distance est comparée à un nouveau seuil, déterminé de manière analogue au seuil appliqué au descripteur DS, correspondant à une probabilité de bonne détection que l'on ixe entre 0.9 et 0.95.

Dans un mode préféré de réalisation, de nouveaux descripteurs détaillés sont associés aux images clés pour fiabiliser la recherche en catalogue. Ces descripteurs sont complémentaires au descripteur détaillé *DD* déjà présenté et peuvent être :

- un descripteur de texture : le descripteur "Edge Histogram" défini par le programme de standardisation MPEG7 convient pour cet usage,
- un descripteur couleur : un histogramme de couleurs sur les espaces colorimétriques YUV, YCrCb, plus robustes aux dégradations apportées par les algorithmes de compression, est également adapté.

Dans les deux cas, la distance L2 est retenue pour évaluer la similarité. Trois études, menées sur chacun de ces descripteurs détaillés, de la probabilité que deux images soient identiques compte tenu d'un seuil $h_{seuil}$ ont été menées. Cette procédure a permis l'obtention de trois seuils $\{h_{seuil}^{DCT}, h_{seuil}^{EdgeHist}, h_{seuil}^{YCrCb}\}$ correspondant à une même probabilité de détection (que l'on fixera entre 0.9 et 0.95).

Lors de la recherche dans le catalogue de référence CR, la distance moyenne entre images clés est évaluée pour chacun de ces descripteurs : celle-ci est comparée à chacun des seuils et la décision positive n'est prise que si chaque descripteur a répondu favorablement (distance entre images clés inférieure au seuil).

**Revendications**

1. Procédé de détermination de séquences répétitives dans un flux vidéo comportant les étapes de segmentation du flux vidéo en segments d'une pluralité d'images selon un critère temporel, de détermination par segment, d'images clés représentatives, **caractérisé en ce qu'**il comporte en outre les étapes de :

   - détermination de descripteurs d'un premier niveau pour toutes les images d'un même segment, undit descripteur de premier niveau comprenant, pour une image considérée, une pluralité de coefficients calculés à partir de ladite image considérée;
   - détermination de descripteurs d'un second niveau pour les images clés des segments, undit descripteur de second niveau comprenant pour une image clé considérée, une pluralité de coefficients calculés à partir de ladite image clé considérée,
   undit coefficient d'un descripteur de premier niveau, par rapport à undit coefficient d'un descripteur de second niveau, ayant subi en outre une opération de quantification;
   - formation de groupes de descripteurs de second niveau selon un critère de proximité entre les descripteurs;
   - détermination de séquences répétitives en fonction des groupes de descripteurs de second niveau formés;
   - détermination d'images prolongeant les séquences répétitives, à partir des descripteurs de premier niveau, pour former des séquences répétitives étendues.

2. Procédé selon la revendication 1, **caractérisé en ce que** les étapes de formation de groupes, détermination de séquences répétitives et formation de séquences répétitives étendues sont effectuées périodiquement.

3. Procédé selon la revendication 1, **caractérisé en ce que** l'étape de détermination de séquences répétitives comporte les étapes de:

   - sélection d'une partie des groupes de descripteurs formés, susceptibles de former une séquence répétitive, à partir d'un critère mis en oeuvre dans un même groupe;
   - création d'ensembles de groupes, chaque ensemble permettant de créer une séquence répétitive, à partir de critères mis en oeuvre entre les groupes.

4. Procédé selon la revendication 3 4, **caractérisé en ce que** les critères entre groupes font partie d'un ensemble de critères composés de critères:

- d'entrelacement des images clés entre les groupes;
- d'espacement entre les positions temporelles inter-groupes;
- de cardinalité des groupes.

5. Procédé selon la revendication 4, **caractérisé en ce que** le critère d'espacement entre les positions temporelles inter-groupes est modifié pour la dernière occurrence d'une séquence répétitive crée, pour la détection de séquence de type bande-annonce/programme long.

6. Procédé selon la revendication 1, **caractérisé en ce que** des informations représentatives des séquences étendues sont stockées dans un catalogue de référence initialement vide.

7. Procédé selon la revendication 6, **caractérisé en ce que** les informations représentatives des séquences étendues sont les descripteurs de second niveau sur les images clés, les descripteurs de premier niveau sur les images de la séquence, la durée de la séquence.

8. Procédé de détection d'une séquence répétitive dans un flux vidéo segmenté dans lequel pour chaque segment des images clés ont été déterminés, **caractérisé en ce qu'**il comporte les étapes de:

- détermination de descripteurs d'un premier niveau pour toutes les images d'un même segment, undit descripteur de premier niveau comprenant, pour une image considérée, une pluralité de coefficients calculés à partir de ladite image considérée;
- détermination de descripteurs d'un second niveau pour les images clés des segments, undit descripteur de second niveau comprenant pour une image clé considérée, une pluralité de coefficients calculés à partir de ladite image clé considérée,
undit coefficient d'un descripteur de premier niveau, par rapport à undit coefficient d'un descripteur de second niveau, ayant subi en outre une opération de quantification;
- détermination d'un ensemble de descripteurs de premier niveau;
- comparaison des descripteurs de l'ensemble déterminé, aux descripteurs de premier niveau contenus dans un catalogue de séquences répétitives obtenues selon la revendication 7;
- sélection de séquences répétitives en fonction du résultat de la comparaison;
- validation de la sélection à partir des descripteurs de second niveau.

9. Dispositif de détermination de séquences répétitives dans un flux vidéo **caractérisé en ce qu'**il comporte des moyens de mise en oeuvre du procédé selon l'une quelconque des revendications 1 à 8.

10. Programme comportant des instructions pour mettre en oeuvre les étapes du procédé selon l'une quelconque des revendications 1 à 7 et/ou les étapes du procédé selon la revendication 8, lorsqu'elles ont exécutées par un processeur.

**Patentansprüche**

1. Verfahren zur Bestimmung von repetitiven Sequenzen in einem Videostrom, umfassend die Schritte der Segmentierung des Videostroms in Segmente einer Vielzahl von Bildern nach einem Zeitkriterium, der Bestimmung von repräsentativen Schlüsselbildern pro Segment, **dadurch gekennzeichnet, dass** es ferner die folgenden Schritte umfasst:

- Bestimmung von Deskriptoren einer ersten Ebene für alle Bilder eines selben Segments, wobei ein Deskriptor erster Ebene für ein betreffendes Bild eine Vielzahl von Koeffizienten umfasst, die auf Basis des betreffenden Bildes berechnet werden;
- Bestimmung von Deskriptoren einer zweiten Ebene für die Schlüsselbilder der Segmente, wobei ein Deskriptor zweiter Ebene für ein betreffendes Schlüsselbild eine Vielzahl von Koeffizienten umfasst, die auf Basis des Schlüsselbildes berechnet werden;
wobei ein Koeffizient eines Deskriptors erste Ebene im Vergleich mit einem Koeffizienten eines Deskriptors zweiter Ebene ferner einem Quantifizierungsvorgang unterzogen wurde;
- Bildung von Gruppen von Deskriptoren zweiter Ebene nach einem Kriterium der Nähe zwischen den Deskriptoren;
- Bestimmung von repetitiven Sequenzen in Abhängigkeit von den gebildeten Gruppen von Deskriptoren zweiter Ebene;
- Bestimmung von Bildern, die die repetitiven Sequenzen verlängern, auf Basis der Deskriptoren erster Ebene, um erweiterte repetitive Sequenzen zu bilden.

2. Verfahren nach Anspruch 1, **dadurch gekennzeichnet, dass** die Schritte der Bildung von Gruppen, der Bestimmung von repetitiven Sequenzen und der Bildung von erweiterten repetitiven Sequenzen periodisch durchgeführt werden.

3. Verfahren nach Anspruch 1, **dadurch gekennzeichnet, dass** der Schritt der Bestimmung von repetitiven Sequenzen die folgenden Schritte umfasst:

- Auswahl eines Teils der gebildeten Gruppen von Deskriptoren, die geeignet sind, eine repetitive Sequenz zu bilden, auf Basis eines in einer selben Gruppe eingesetzten Kriteriums;
- Schaffung von Gesamtheiten von Gruppen, wobei es jede Gesamtheit ermöglicht, eine repetitive Sequenz zu schaffen, auf Basis von zwischen den Gruppen eingesetzten Kriterien.

4. Verfahren nach Anspruch 3, **dadurch gekennzeichnet, dass** die Kriterien zwischen Gruppen Teil einer Gesamtheit von Kriterien sind, die sich aus den folgenden Kriterien zusammensetzt:

- Verflechtung der Schlüsselbilder zwischen den Gruppen;
- Abstand zwischen den zeitlichen Positionen innerhalb der Gruppen;
- Kardinalität der Gruppen.

5. Verfahren nach Anspruch 4, **dadurch gekennzeichnet, dass** das Abstandskriterium zwischen den zeitlichen Positionen innerhalb der Gruppen für das letzte Auftreten einer geschaffenen repetitiven Sequenz für die Erfassung einer Sequenz vom Typ Vorschauband/Langprogramm verändert wird.

6. Verfahren nach Anspruch 1, **dadurch gekennzeichnet, dass** für die erweiterten Sequenzen repräsentative Informationen in einem ursprünglich leeren Referenzkatalog gespeichert sind.

7. Verfahren nach Anspruch 6, **dadurch gekennzeichnet, dass** die für die erweiterten Sequenzen repräsentativen Informationen die Deskriptoren zweiter Ebene auf den Schlüsselbildern, die Deskriptoren erster Ebene auf den Bildern der Sequenz, die Dauer der Sequenz sind.

8. Verfahren zur Erfassung einer repetitiven Sequenz in einem segmentierten Videostrom, bei dem für jedes Segment Schlüsselbilder bestimmt wurden, **dadurch gekennzeichnet, dass** es die folgenden Schritte umfasst:

- Bestimmung von Deskriptoren erster Ebene für alle Bilder eines selben Segments, wobei ein Deskriptor erster Ebene für ein betreffendes Bild eine Vielzahl von Koeffizienten umfasst, die auf Basis des betreffenden Bildes berechnet wurden;
- Bestimmung von Deskriptoren einer zweiten Ebene für die Schlüsselbilder der Segmente, wobei ein Deskriptor zweiter Ebene für ein betreffendes Schlüsselbild eine Vielzahl von Koeffizienten umfasst, die auf Basis des betreffenden Schlüsselbildes berechnet wurden, wobei ein Koeffizient eines Deskriptors erste Ebene im Vergleich mit einem Koeffizienten eines Deskriptors zweiter Ebene ferner einem Quantifizierungsvorgang unterzogen wurde;
- Bestimmung einer Gesamtheit von Deskriptoren erster Ebene;
- Vergleich der Deskriptoren der bestimmten Gesamtheit mit den Deskriptoren erster Ebene, die in einem Katalog von repetitiven Sequenzen enthalten sind, die nach Anspruch 7 erhalten werden;
- Auswahl von repetitiven Sequenzen in Abhängigkeit vom Resultat des Vergleichs;
- Validierung der Auswahl auf Basis der Deskriptoren zweiter Ebene.

9. Vorrichtung zur Bestimmung von repetitiven Sequenzen in einem Videostrom, **dadurch gekennzeichnet, dass** sie Mittel für den Einsatz des Verfahrens nach einem der Ansprüche 1 bis 8 umfasst.

10. Programm, umfassend Anweisungen für den Einsatz der Schritte des Verfahrens nach einem der Ansprüche 1 bis 7 und/oder der Schritte des Verfahrens nach Anspruch 8, wenn sie von einem Prozessor ausgeführt werden.

**Claims**

1. Method for determining repetitive sequences in a video stream including steps of segmenting the video stream into segments of a plurality of images depending on a temporal criterion, and of determining, per segment, representative key images, **characterized in that** it furthermore includes steps of:

- determining descriptors of a first level for the images of a given segment, a said first-level descriptor comprising, for an image in question, a plurality of coefficients calculated on the basis of said image in question;
- determining descriptors of a second level for the key images of the segments, a said second-level descriptor comprising, for a key image in question, a plurality of coefficients calculated on the basis of said key image in question,
a said coefficient of a first-level descriptor, with respect to a said coefficient of a second-level descriptor, having furthermore undergone a quantification operation;
- forming groups of second-level descriptors depending on a criterion of proximity between the descriptors;
- determining repetitive sequences depending on the formed groups of second-level descriptors;
- determining images extending the repetitive sequences, on the basis of the first-level descriptors, in order to form extended repetitive sequences.

2. Method according to Claim 1, **characterized in that** the steps of forming groups, determining repetitive sequences and forming extended repetitive sequences are carried out periodically.

3. Method according to Claim 1, **characterized in that** the step of determining repetitive sequences includes steps of:

- selecting a portion of the formed groups of descriptors, liable to form a repetitive sequence, on the basis of a criterion implemented in a given group;
- creating sets of groups, each set allowing a repetitive sequence to be created, on the basis of criteria implemented between the groups.

4. Method according to Claim 3, **characterized in that** the criteria between groups form part of a set of criteria composed of criteria:

- of interlacing of the key image between the groups;
- of spacing between the inter-group temporal positions;
- of cardinality of the groups.

5. Method according to Claim 4, **characterized in that** the criterion of spacing between the inter-group temporal positions is modified for the last occurrence of a created repetitive sequence, in order to detect a sequence of trailer/long-program type.

6. Method according to Claim 1, **characterized in that** information representative of extended sequences is stored in an initially empty reference catalogue.

7. Method according to Claim 6, **characterized in that** the information representative of extended sequences is the second-level descriptors of the key images, the first-level descriptors of the images of the sequence, and the duration of the sequence.

8. Method for detecting a repetitive sequence in a segmented video stream in which, for each segment key images have been determined, **characterized in that** it includes steps of:

- determining descriptors of a first level for all the images of a given segment, a said first-level descriptor comprising, for an image in question, a plurality of coefficients calculated on the basis of said image in question;
- determining descriptors of a second level for the key images of the segments, a said second-level descriptor comprising, for a key image in question, a plurality of coefficients calculated on the basis of said key image in question,
a said coefficient of a first-level descriptor, with respect to a said coefficient of a second-level descriptor, having furthermore undergone a quantification operation;
- determining a set of first-level descriptors;
- comparing the descriptors of the determined set to the first-level descriptors contained in a catalogue of repetitive sequences obtained according to Claim 7;
- selecting repetitive sequences depending on the result of the comparison;
- validating the selection on the basis of the second-level descriptors.

9. Device for determining repetitive sequences in a video stream, **characterized in that** it includes means for implementing the method according to any one of Claims 1 to 8.

10. Program including instructions for implementing the steps of the method according to any one of Claims 1 to 7 and/or the steps of the method according to Claim 8, when they are executed by a processor.

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JEAN-PHILIPPE POLI.** Predicting program guides for video structuring. *In Proc. of the 17th IEEE International Conférence on Tools with Artificial Intelligence,* Novembre 2005, 407-411
- **XAVIER NATUREL ; GUILLAUME GRAVIER ; PATRICK GROS.** Fast structuring of large television streams using program guides. *4th International Workshop on Adaptive Multimedia Retrieval (AMR),* Juillet 2006

- **LIUHONG LIANG ; HONG LU ; XIANGYANG XUE ; YAP-PENG TAN.** Program segmentation for TV vidéos. *IEEE Int. Symposium on Circuits and Systems,* 2005, vol. 2, 1549-1552
- ARGOS: Automatically Extracting Repeating Objects From Multimedia Streams. *IEEE trans. on Multimedia.,* Février 2006, vol. 8 (1), 115-129